# FASCICULE DE BREVET EUROPEEN

(11) **EP 2 596 450 B1**
(45) Date de publication et mention de la délivrance du brevet: **15.10.2014**
(21) Numéro de dépôt: 11733872.3
(22) Date de dépôt: 19.07.2011
(51) Int. Cl.: G06F 21/10, H04L 9/08, H04N 21/2347, H04N 21/266, H04N 21/4405

(54) **PROCEDE DE PROTECTION D'UN CONTENU**
VERFAHREN ZUM SCHUTZ EINES INHALTS
METHOD OF PROTECTING A CONTENT

(30) Priorité: 22.07.2010 FR 1056000
(43) Date de publication de la demande: 29.05.2013
(73) Titulaire: Viaccess, 92057 Paris La Défense (FR)
(72) Inventeur: NEAU, Louis, F-35410 Chateaugiron (FR)
(74) Mandataire: Ilgart, Jean-Christophe
(86) Numéro de dépôt international: PCT/EP2011/062368
(87) Numéro de publication internationale: WO 2012/010603

(56) Documents cités:
- EP-A1- 1 575 292
- WO-A1-2005/057926

## Description

### DOMAINE TECHNIQUE

L'invention se situe dans le domaine de protection de contenus, et concerne plus particulièrement un procédé de protection d'un contenu à distribuer à un parc de terminaux de réceptions connectés à un réseau de distribution de contenu et ayant chacun un niveau de sécurité spécifique dépendant des moyens techniques de sécurisation utilisés. Le procédé selon l'invention vise plus spécifiquement à conditionner à un niveau de sécurité prédéterminé, le désembrouillage dudit contenu et comporte les étapes suivantes :
à l'émission,
   - générer une clé d'embrouillage dudit contenu,
   - transformer ladite clé d'embrouillage par un premier module de calcul agencé en tête dudit réseau de distribution de contenu,
   - embrouiller le contenu par la clé transformée,
   - transmettre le contenu embrouillé et la clé d'embrouillage aux terminaux, et,
      - à la réception dudit contenu et de la clé d'embrouillage par un terminal,
         - transformer ladite clé d'embrouillage par un deuxième module de calcul agencé dans ledit terminal,
         - désembrouiller le contenu avec la clé d'embrouillage transformée.

Le procédé selon l'invention est mis en oeuvre au moyen d'un dispositif comportant :
- des moyens pour générer une clé d'embrouillage dudit contenu,
- des moyens pour transformer ladite clé d'embrouillage par un premier module de calcul agencé en tête dudit réseau de distribution de contenu,
- des moyens pour embrouiller le contenu par la clé transformée,
- des moyens pour transmettre le contenu embrouillé et la clé d'embrouillage aux terminaux, et,
- des moyens pour transformer ladite clé d'embrouillage par un deuxième module de calcul agencé dans ledit terminal,
- des moyens pour désembrouiller le contenu avec la clé d'embrouillage transformée.

L'invention concerne également un terminal de réception d'un contenu distribué sous forme embrouillée au moyen d'une clé d'embrouillage préalablement transformée par le procédé selon l'invention.

L'invention concerne aussi un programme d'ordinateur mémorisé dans un support d'enregistrement et destiné, lorsqu'il est exécuté par un ordinateur, à mettre en oeuvre le procédé selon l'invention.

### ÉTAT DE LA TECHNIQUE ANTÉRIEURE

L'augmentation croissante du débit de transmission de données par Internet offre aux opérateurs de services de nouvelles perspectives dans la distribution de contenus audiovisuels.

Aujourd'hui, notamment sur le marché de l'IPTV, un grand nombre d'opérateurs de services aspire à offrir les mêmes contenus MPEG2-TS aussi bien à des terminaux de réception de type PC qu'à des terminaux classiques munis d'un décodeur (STB, pour Set Top Box). Dans ces conditions, la norme DVB-CSA (pour Digital Video Broadcasting-Common Scrambling Algorithm) est vue comme un frein au développement des services sur de nouveaux terminaux, car contrairement au standard AES (Advanced Encryption Standard) par exemple, elle impose un élément matériel complémentaire pour le désembrouillage des contenus (par exemple un descrambler DVB-CSA), typiquement une clé USB. Le standard AES est donc considérée comme alternative à la norme DVB-CSA pour protéger des contenus payants

Un des risques est d'assister à une segmentation ou verticalisation du marché en fonction des algorithmes implémentés par chacun des différents acteurs et à une perte d'interopérabilité au détriment, à terme, des opérateurs de services eux-mêmes.

Par ailleurs, les opérateurs de services sont tenus de respecter les conditions de sécurité exigées par les fournisseurs de programmes. En effet, ces derniers peuvent imposer que certains contenus ou certaines qualités de contenus, tels que par exemple les programmes diffusés en qualité HD (Haute définition) en 3D, ne puissent pas être accessibles dans des terminaux faiblement sécurisés tels que les PC par exemple.

En outre, les algorithmes d'embrouillage utilisables pour la protection des contenus MPEG2-TS sont potentiellement multiples et sont susceptibles de varier en fonction des terminaux ciblés par l'opérateur de services. Ceci peut engendrer une complexité et un coût supplémentaires notamment pour l'opérateur de services au regard des exigences des ayants-droits et des intérêts industriels.

Si un algorithme d'embrouillage unique était retenu pour pouvoir cibler l'ensemble des terminaux, il devrait être basé sur une implémentation logicielle, typiquement une mise en oeuvre de l'AES. Or, les ayants-droits souhaitent, selon le type de contenu, pouvoir faire la différence entre terminaux disposant de la combinaison de plusieurs moyens techniques de sécurisation, typiquement hardware, et les autres, afin d'éviter de mettre en péril leur modèle économique.

Dans cette dernière hypothèse, une solution à ce problème consiste à discriminer les terminaux, de sorte que ceux qui ne disposent pas des moyens techniques de sécurisation requis n'accèdent pas aux contenus protégés. Cette solution peut engendrer des périodes d'écran noir, à moins de proposer de multiples canaux de distribution de contenus prenant en considération la diversité des terminaux de réception.

Un but de l'invention est de permettre aux opérateurs de service d'utiliser une solution unique pour embrouiller les contenus distribués adaptables à des terminaux de réception ayant des niveaux de sécurité spécifiques différents.

Le niveau de sécurité spécifique d'un terminal est défini par les moyens techniques mis en oeuvre dans le terminal de réception. Ainsi, un terminal muni d'une clé USB destiné à désembrouiller le contenu aura un niveau de sécurité différent de celui d'un terminal PC dans lequel le désembrouillage d'un contenu est obtenu uniquement par un logiciel.

Pour une meilleure compréhension concernant la terminologie propre aux domaines techniques CAS et DRM, le lecteur peut par exemple se reporter aux documents suivants :
- sur les systèmes d'accès conditionnel, « Functional Model of Conditional Access System », EBU Review, Technical European Broadcasting Union, Brussels, BE, n° 266, 21 décembre 1995 ;
- sur les systèmes de gestion de droits numériques, « DRM Spécification », Open Mobile Alliance OMA-TS-DRM-DRM-V2_0_2-20080723-A, Approved version 2.0.2 - 23 Jul 2008.

Pour simplifier la compréhension de l'invention, on appellera de façon générique « Agent DRM »:
- les composants CAS ou DRM en tête de réseau assurant la construction des Licences ou des ECM protégeant la clé du contenu embrouillé et l'associant les conditions relatives à l'accès au contenu ;
- les composants CAS ou DRM dans les terminaux assurant l'accès aux Licences ou ECM protégeant la clé du contenu embrouillé et contrôlant l'accès cette clé selon les conditions relatives à l'accès au contenu.

Par ailleurs, le document EP-1575292-A1 divulgue une méthode de sécurisation d'un contenu chiffré transmis par un diffuseur dans un contexte de télévision à péage. Cette méthode met en oeuvre des droit d'accès au contenu géré par des EMM (Entitlement Management Message) et par des messages de contrôle de type ECM.

### EXPOSÉ DE L'INVENTION

L'invention préconise alors un procédé de protection d'un contenu à distribuer à un parc de terminaux de réceptions connectés à un réseau de distribution de contenu et ayant chacun un niveau de sécurité spécifique dépendant des moyens techniques de sécurisation utilisés comportant en outre les étapes suivantes :
à l'émission,
   - appliquer à ladite clé d'embrouillage, au moyen dudit premier module de calcul, une fonction F définie en fonction dudit niveau de sécurité spécifique,
et à la réception,
   - appliquer à ladite clé d'embrouillage, au moyen dudit deuxième module de calcul, une fonction F définie en fonction dudit niveau de sécurité spécifique.

Selon l'invention, lesdits premier et deuxième modules de calcul comportent chacun une ou plusieurs fonctions Fi de transformations de ladite clé d'embrouillage, chaque fonction Fi correspondant à un niveau de sécurité Ni donné. Les moyens techniques de sécurisation définissant les niveaux de sécurité Ni en relation avec les fonctions Fi sont soit logiciels soit matériels et comportent au moins l'une des caractéristiques suivantes dans le terminal:
- stockage de la clé d'embrouillage sous forme chiffrée dans une mémoire non volatile du terminal,
- stockage du code applicatif du terminal sous forme chiffrée dans une mémoire non volatile du terminal,
- chargement dans une mémoire volatile dudit terminal du code applicatif chiffré lors de son exécution,
- l'obscurcissement dudit code.

Selon l'invention, on entend par premier et deuxième module de calcul tout composant matériel et logiciel mettant en oeuvre les fonctions F ou Fi respectivement à l'émission en tête de réseau et à la réception dans le terminal.

Préférentiellement, la clé d'embrouillage est transmise aux terminaux chiffrée au moyen d'un ECM ou d'une licence, et l'application de la fonction F à la clé d'embrouillage est pilotée par l'opérateur via une signalisation PMT (Program Mapping Table). Dans le cas ou plusieurs niveaux de sécurité Ni sont définis, les informations de la PMT indiquent si une fonction Fi est à appliquer et dans l'affirmative son identification.

Dans un mode préféré de mise en oeuvre du procédé selon l'invention, ledit second module de calcul comporte plusieurs fonctions Fi de transformations de ladite clé d'embrouillage, chaque fonction Fi correspondant à un niveau de sécurité Ni donné variant entre un niveau minimal de sécurité et un niveau maximal de sécurité correspondant au niveau de sécurité spécifique du terminal.

A titre d'exemple, la fonction F est une fonction à sens unique telle que le chiffrement d'une clé par elle-même avec un algorithme AES ou TDES.

Dans une application particulière du procédé selon l'invention, le contenu à distribuer est un flux numérique comportant une composante de base nécessitant le niveau minimal de sécurité et au moins une composante supplémentaire nécessitant un niveau supérieur de sécurité. Dans un tel cas, l'embrouillage du contenu par la clé d'embrouillage transformée est appliqué soit globalement à toutes les composantes du flux, soit sélectivement à chaque composante du flux.

Le procédé selon l'invention est mis en oeuvre par un dispositif émetteur d'un contenu à distribuer à un parc de terminaux de réceptions (4, 8, 70), connecté à un réseau de distribution de contenu et ayant chacun un niveau de sécurité spécifique dépendant des moyens techniques de sécurisation utilisés, dispositif comportant un générateur (16) de clé d'embrouillage dudit contenu un embrouilleur du contenu par la clé transformée, des moyens pour transmettre le contenu embrouillé et la clé d'embrouillage aux terminaux, ce dispositif comporte en outre une ou plusieurs fonctions Fi de transformations de ladite clé d'embrouillage K, chaque fonction Fi correspondant à un niveau de sécurité Ni donné.

Le procédé selon l'invention s'applique à un terminal de réception d'un contenu appartenant à un parc de terminaux de réceptions connectés à un réseau de distribution de contenu et ayant chacun un niveau de sécurité spécifique dépendant des moyens techniques de sécurisation utilisés, ledit contenu étant distribué sous forme embrouillée au moyen d'une clé d'embrouillage préalablement transformée par un premier module de calcul agencé en tête de réseau. Le terminal selon l'invention comporte un deuxième module de calcul destiné à appliquer à ladite clé d'embrouillage une transformation permettant de retrouver la clé transformée utilisée à l'émission pour embrouiller le contenu transmis.

Ce terminal comporte un programme d'ordinateur mémorisé sur un support d'enregistrement et comportant des instructions pour réaliser, lorsqu'il est exécuté sur un ordinateur, les étapes du procédé selon l'invention.

Le procédé selon l'invention est mis en oeuvre à l'émission au moyen d'un programme d'ordinateur mémorisé sur un support d'enregistrement et comportant des instructions pour calculer, lorsqu'elles sont exécutées par un ordinateur, une clé d'embrouillage transformée par une fonction F.

En outre, côté réception, le procédé selon l'invention est mis en oeuvre par un programme d'ordinateur mémorisé sur un support d'enregistrement et comportant des instructions pour retrouver, lorsqu'elles sont exécuté par un ordinateur, la clé d'embrouillage transformée à l'émission par ladite fonction F.

### BRÈVE DESCRIPTION DES DESSINS

D'autres caractéristiques et avantages de l'invention ressortiront de la description qui va suivre, prise à titre d'exemple non limitatif, en référence aux figures annexées dans lesquelles :
- la figure 1 illustre schématiquement une architecture de distribution d'un contenu protégé mettant en oeuvre le procédé selon l'invention,
- la figure 2 illustre schématiquement un exemple d'application du procédé selon l'invention dans le cas d'un contenu protégé distribué en streaming adaptatif.

### EXPOSÉ DÉTAILLÉ DE MODES DE RÉALISATION PARTICULIERS

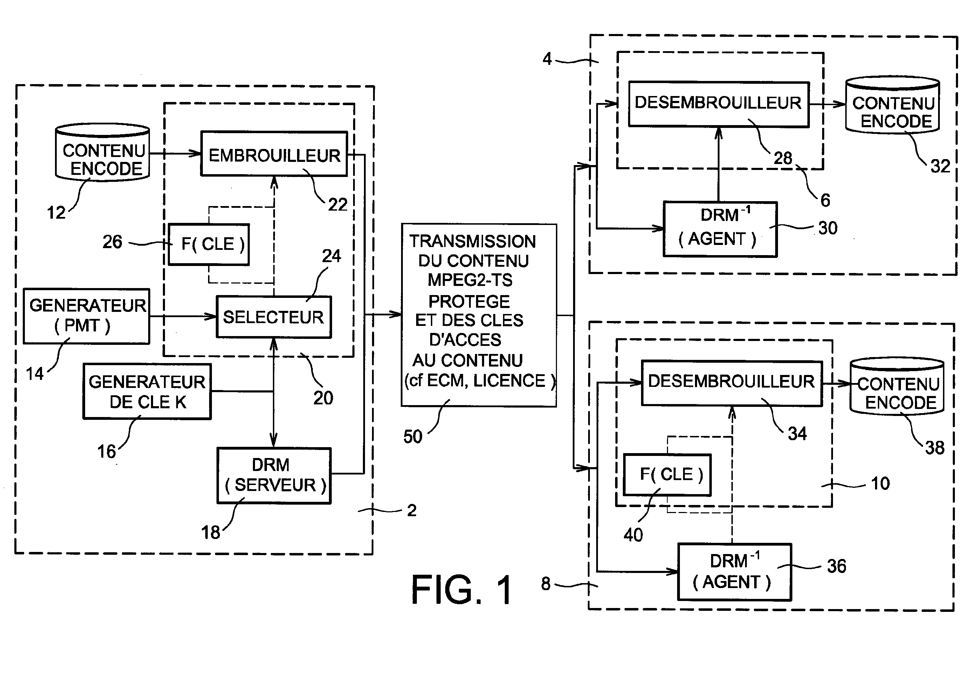

La figure 1 illustre schématiquement une architecture de distribution d'un contenu protégé comportant une plate-forme 2 de conditionnement du contenu à distribuer agencée en tête de réseau, un premier terminal récepteur 4 muni d'un module de désembrouillage 6 à faible niveau de sécurité, et un deuxième terminal récepteur 8 muni d'un module de désembrouillage 10 à niveau de sécurité élevé par rapport à celui du premier terminal récepteur 4. La plate-forme 2 comporte en outre une mémoire 12 destinée au stockage du contenu à distribuer, un générateur de signalisation PMT (Program Mapping Table) 14, un générateur de clé d'embrouillage 16, un agent DRM (pour Digital Right Management) 18, et un module d'embrouillage 20 comportant un embrouilleur 22, un sélecteur de clé d'embrouillage 24, et un premier module de calcul 26 comportant plusieurs fonctions Fi de transformations de ladite clé d'embrouillage, chaque fonction Fi correspondant à un niveau de sécurité Ni donné spécifique à l'un des terminaux de réceptions 4, 8.

Le premier terminal récepteur 4 comporte en outre un désembrouilleur 28, un agent DRM 30 et une mémoire 32 destinée au stockage du contenu sous forme désembrouillée. Le deuxième terminal récepteur 8 comporte également un désembrouilleur 34, un agent DRM 36, une mémoire 38 destinée au stockage du contenu sous forme désembrouillée, et un deuxième module de calcul 40 comportant les fonctions Fi de transformations de ladite clé d'embrouillage, chaque fonction Fi correspondant à un niveau de sécurité Ni donné.

En fonctionnement, à l'émission, le générateur 14 génère une clé K d'embrouillage du contenu à distribuer, transmet la clé K générée à l'agent DRM 18 pour embrouiller le contenu au moyen de la clé K.

Le générateur de signalisation PMT (Program Mapping Table) 14 transmet au sélecteur de clé d'embrouillage 24 l'identifiant d'une fonction F à appliquer à la clé K pour la transformer préalablement à l'embrouillage du contenu. La fonction F est définie en fonction du niveau de sécurité spécifique au module de désembrouillage du terminal de réception destiné à recevoir le contenu.

Après application de la fonction F à la clé K, le premier module de calcul 26 fournit à l'embrouilleur 22 une clé transformée F(K) qui servira à embrouiller le contenu. Le contenu embrouillé est ensuite fourni à un module de transmission 50 pour être transmis aux terminaux 4 et 8. La clé d'embrouillage est également transmise, sous forme chiffrée, aux terminaux au moyen d'un ECM ou d'une licence.

Côté réception, le terminal 4 ne disposant pas de module de calcul de fonction F, ne pourra pas générer la clé transformée F(K) ayant servi à embrouiller le contenu en tête de réseau par conséquent, le désembrouilleur 6 ne pourra pas désembrouiller le contenu reçu. Par contre, le terminal 8, disposant d'un deuxième module de calcul 40 pourra, après réception de la signalisation PMT permettant d'identifier la fonction F utilisée par le premier module de calcul 26, générer la clé transformée F(K) et désembrouiller le contenu a moyen de cette clé transformée.

Il est à noter que lesdits premier et deuxième modules de calcul 26 et 40 sont programmés pour appliquer chacun plusieurs fonctions Fi de transformations de ladite clé d'embrouillage qui dépendent des moyens techniques de sécurisation des terminaux de réception du contenu et varient entre un niveau minimal de sécurité et un niveau maximal de sécurité.

Ainsi, à chaque fonction Fi est affecté par programmation un niveau de sécurité Ni donné, ce niveau de sécurité Ni prenant en considération les moyens techniques de sécurisation suivants donnés à titre d'exemple non limitatif:
- possibilité de stockage de la clé d'embrouillage sous forme chiffrée dans une mémoire non volatile du terminal,
- possibilité de stockage du code applicatif du terminal sous forme chiffrée dans une mémoire non volatile du terminal,
- possibilité de chargement dans une mémoire volatile dudit terminal du code applicatif chiffré lors de son exécution,
- possibilité de d'obscurcissement dudit code.

Par exemple, le niveau de sécurité spécifique d'un terminal peut être quantifié selon le tableau ci-dessous :

| **Moyen technique de sécurisation** | **Niveau Oui/Non** | **Terminal Modèle A** | **Terminal Modèle B** | **Terminal Modèle C** | **Terminal Modèle D** |
|---|---|---|---|---|---|
| Protection du CW* niveau Chipset | 50/0 | Oui :50 | Non :0 | Oui :50 | Non :0 |
| Code chiffré en mémoire non volatile | 15/0 | Oui :15 | Oui : 15 | Non :0 | Non :0 |
| Code chiffré en mémoire volatile (RAM) à l'exécution | 30/0 | Non :0 | Non :0 | Non :0 | Non :0 |
| Obscurcissement du code | 05/0 | Non :0 | Oui :5 | Oui :5 | Non :0 |
| Niveau de sécurité spécifique (Ni) (Somme Totale) | Niveau Max 100 | 65 (niveau supérieur) | 20 (niveau modéré) | 55 (niveau renforcé) | 0 (niveau faible) |

Dans l'exemple donné sur le tableau ci-dessus, on comprend que le niveau de sécurité spécifique d'un terminal varie de 0 à 100 selon la présence partielle ou complète des moyens techniques de sécurisation. On peut donc prévoir dans les premiers et deuxième modules de sécurité autant de fonctions Fi que de niveaux de sécurité spécifiques Ni (dans le cas présent 16 niveaux différents).

Dans l'exemple de la figure 1, le terminal 4 a un niveau de sécurité qui est défini par le fait que le seul moyen utilisé pour désembrouiller un contenu est un logiciel constitué par l'agent DRM 30, alors que le terminal 8 a un niveau de sécurité défini par le fait qu'en plus du logiciel constitué par l'agent DRM 36, le désembrouilleur 34 comporte le deuxième module de calcul 40 qui est programmé pour appliquer la fonction F de transformation de la clé K. La génération de la fonction F est commandée, à partir de la tête de réseau, par la plate-forme 2 au moyen de la signalisation PMT transportant une description de la fonction F utilisée, en tête de réseau, par le premier module de calcul 26 pour générer la clé transformée F (K) .

Dans un exemple de mise en oeuvre, ladite fonction F est une fonction à sens unique (« one way function »), c'est-à-dire une fonction difficilement réversible. Une première possibilité pour la fonction F est l'utiliser un algorithme de chiffrement tel AES ou TDES pour le chiffrement de K avec comme une clé K. Toute autre fonction à sens unique peut convenir telle que par exemple "Rabin function' ou une fonction de calcul de MAC telle que 'SHA 256'. Pour éviter une reproduction pirate de la fonction F par voie logicielle, il sera préféré pour F une fonction dont le calcul par un logiciel exécuté par un microprocesseur traditionnel (pour PC ou Set Top Box) soit long à effectuer (10 secondes ce qui correspond à une cryptopériode par exemple) par rapport à la même fonction exécutée par un composant matériel spécialisé (Digital Signal Processor, Digital Logic Array) exclusif pour les terminaux disposant du module de calcul et grâce auquel la fonction F sera exécutée instantanément (typiquement quelques dizaines de millisecondes) . Dans cette optique, pour exploiter la différence de performance, on pourra utiliser pour F les exemples de fonctions à sens unique précédemment cités en enchainant un nombre important d'itérations successives (par exemple enchaînement de 10000 opérations SHA256 sur le dernier résultat obtenu).

Le contenu à distribuer est par exemple un flux numérique comportant une composante de base ayant le niveau minimal de sécurité et au moins une composante supplémentaire ayant le niveau supérieur de sécurité. Dans ce cas, l'embrouillage du contenu par la clé d'embrouillage transformée est appliqué soit globalement à toutes les composantes du flux, soit sélectivement à chaque composante du flux.

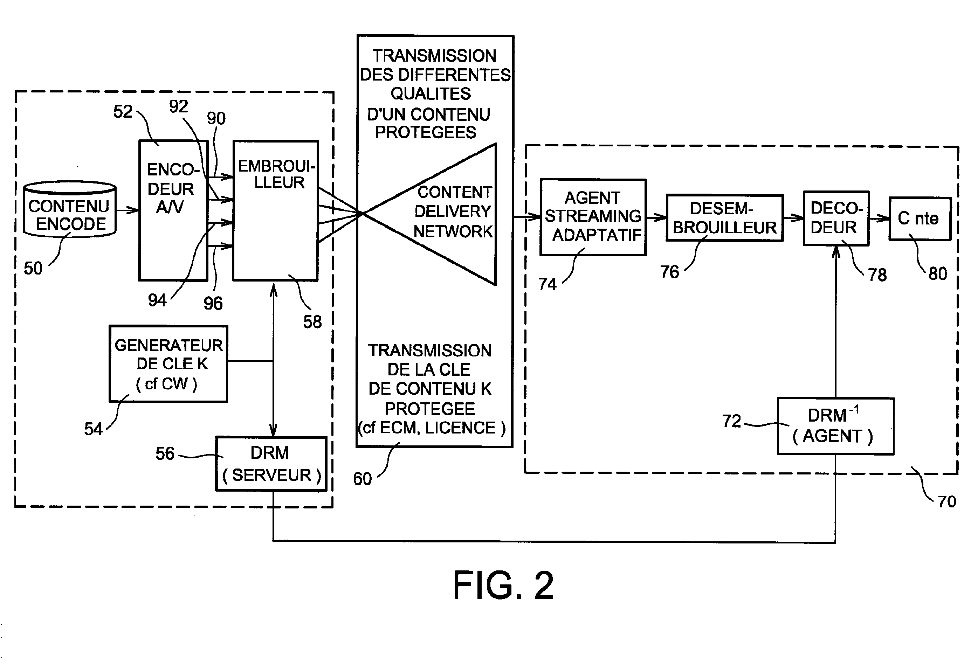

La figure 2 illustre une architecture destinée à appliquer le procédé selon l'invention à un flux dans un contexte de streaming adaptatif.

Dans cette architecture, la plateforme 2 de conditionnement du contenu à distribuer comporte une mémoire 50 pour stocker les contenus à distribuer, un encodeur A/V 52, un générateur de clé d'embrouillage 54, un agent DRM 56, et un embrouilleur 58. La plateforme 2 communique avec un multiplexeur 60 adapté pour transmettre les contenus à un terminal 70. Ce dernier comporte un agent DRM 72, module d'adaptation de flux 74, un désembrouilleur 76, un décodeur 78, et une mémoire 80 pour le stockage des contenus reçus.

Côté émission, un contenu à distribuer, fourni par la mémoire 50, est conditionné par l'encodeur 52 de sorte à délivrer quatre flux distincts transportant le même contenu ayant, par exemple, respectivement pour débit 300 Kbit/s, 700 Kbit/s, 1,5 Mbit/s, et 4 Mbit/s, à chaque débit est associé un niveau de qualité et un niveau de sécurité conditionnant qui sont utilisés pour coder la fonction de transformation F.

Il est à noter que l'application du procédé selon l'invention 90, 92, 94, et 96 au streaming adaptatif nécessite une synchronisation des clés d'embrouillage sur les flux associés aux différentes qualités d'un même contenu, ceci afin de pouvoir commuter d'une qualité à une autre, typiquement en fonction du débit disponible pour l'utilisateur, sans impact sur la continuité du service rendu.

En fonctionnement, l'embrouilleur 58 fournit les flux 90, 92, 94, et 96 au multiplexeur 60 et l'agent DRM 56 de la plate-forme 2 fournit la clé d'embrouillage K à l'agent DRM 72 du terminal 70. Les flux 90, 92, 94, et 96 sont ensuite transmis par le multiplexeur 60 au module d'adaptation de flux 74 qui les transmet au désembrouilleur 76. Le désembrouilleur 76 est programmé pour désembrouiller le ou les flux ayant un débit donné en fonction du type de terminal de réception 70 et/ou des droits d'accès au contenu acquis pour ce terminal. Ainsi, un terminal recevra le contenu avec l'un des débits 300 Kbit/s ou 700 Kbit/s ou 1,5 Mbit/s, ou 4 Mbit/s. Le contenu ainsi désembrouillé est soit visualisé, soit mémorisé dans la mémoire 80 en fonction des droits d'accès associés au terminal 70.

## Revendications

1. Procédé de protection d'un contenu à distribuer à un parc de terminaux de réceptions (4, 8, 70) connectés à un réseau de distribution de contenu et ayant chacun un niveau de sécurité spécifique dépendant des moyens techniques de sécurisation utilisés, procédé comportant les étapes suivantes :
à l'émission,
- générer une clé d'embrouillage K dudit contenu,
- transformer ladite clé d'embrouillage K par un premier module de calcul (26) agencé en tête dudit réseau de distribution de contenu,
- embrouiller le contenu par la clé transformée,
- transmettre le contenu embrouillé et la clé d'embrouillage aux terminaux (4, 8, 70), et,
- à la réception dudit contenu et de la clé d'embrouillage par un terminal (4, 8, 70),
- transformer ladite clé d'embrouillage par un deuxième module de calcul (40) agencé dans ledit terminal (4, 8, 70),
- désembrouiller le contenu avec la clé d'embrouillage transformée,
procédé **caractérisé en outre par** les étapes consistant à,
à l'émission,
- appliquer à ladite clé d'embrouillage K, au moyen dudit premier module de calcul (26), une fonction F définie en fonction dudit niveau de sécurité spécifique,
et à la réception,
- appliquer à ladite clé d'embrouillage, au moyen dudit deuxième module de calcul (40), une fonction F définie en fonction dudit niveau de sécurité spécifique.

2. Procédé selon la revendication 1 dans lequel, lesdits premier module de calcul (26) et deuxième module de calcul (40) comportent chacun plusieurs fonctions Fi de transformations de ladite clé d'embrouillage K, chaque fonction Fi correspondant à un niveau de sécurité Ni donné.

3. Procédé selon la revendication 1 dans lequel, lesdits moyens techniques de sécurisation sont soit logiciels, soit matériels.

4. Procédé selon la revendication 3 dans lequel, lesdits moyens de sécurisation comportent au moins l'une des caractéristiques suivantes:
- stockage de la clé d'embrouillage sous forme chiffrée dans une mémoire non volatile du terminal,
- stockage du code applicatif du terminal sous forme chiffrée dans une mémoire non volatile du terminal,
- chargement dans une mémoire volatile dudit terminal du code applicatif chiffré lors de son exécution,
- l'obscurcissement dudit code.

5. Procédé selon la revendication 1 dans lequel, la clé d'embrouillage K est transmise, sous forme chiffrée, aux terminaux (4, 8, 70) via un ECM ou une licence DRM (Digital Right Management).

6. Procédé selon la revendication 1 dans lequel, l'application de la fonction F à la clé d'embrouillage K est pilotée par l'opérateur via une signalisation PMT (Program Mapping Table).

7. Procédé selon la revendication 2 dans lequel, ledit second module de calcul comporte plusieurs fonctions Fi de transformations de ladite clé d'embrouillage, chaque fonction Fi correspondant à un niveau de sécurité Ni donné variant entre un niveau minimal de sécurité et un niveau maximal de sécurité correspondant au niveau de sécurité spécifique du terminal.

8. Procédé selon la revendication 7 dans lequel, ladite fonction F est une fonction à sens unique.

9. Procédé selon l'une quelconque des revendications précédentes dans lequel le contenu à distribuer est un flux numérique comportant une composante de base ayant le niveau minimal de sécurité et au moins une composante supplémentaire ayant un niveau supérieur de sécurité.

10. Procédé selon la revendication 9 dans lequel, l'embrouillage du contenu par la clé d'embrouillage transformée est appliqué soit globalement à toutes les composantes du flux, soit sélectivement à chaque composante du flux.

11. Application du procédé selon la revendication 10 à un flux dans un contexte de streaming adaptatif dans laquelle, la fonction F est appliquée aux composantes du flux de meilleures qualités.

12. Dispositif émetteur d'un contenu à distribuer à un parc de terminaux de réceptions (4, 8, 70), connecté à un réseau de distribution de contenu et ayant chacun un niveau de sécurité spécifique dépendant des moyens techniques de sécurisation utilisés, dispositif comportant un générateur (16) de clé d'embrouillage dudit contenu un embrouilleur du contenu par la clé transformée, des moyens pour transmettre le contenu embrouillé et la clé d'embrouillage aux terminaux, dispositif **caractérisé en ce qu'**il comporte en outre une ou plusieurs fonctions Fi de transformations de ladite clé d'embrouillage K, chaque fonction Fi correspondant à un niveau de sécurité Ni donné.

13. Terminal de réception d'un contenu appartenant à un parc de terminaux de réceptions connecté à un réseau de distribution de contenu et ayant chacun un niveau de sécurité spécifique dépendant des moyens techniques de sécurisation utilisés, ledit contenu étant distribué sous forme embrouillée au moyen d'une clé d'embrouillage préalablement transformée par un premier module de calcul (26) agencé en tête de réseau, ladite clé étant transmise audit terminal **caractérisé en ce qu'**il comporte un deuxième module de calcul destiné à appliquer à ladite clé d'embrouillage une transformation permettant de à retrouver la clé transformée utilisée à l'émission pour embrouiller le contenu transmis.

14. Programme d'ordinateur mémorisé sur un support d'enregistrement et comportant des instructions pour calculer, lorsqu'elles sont exécutées par un ordinateur, une clé d'embrouillage transformée à l'émission par une fonction F du procédé de la revendication 1.

15. Programme d'ordinateur mémorisé sur un support d'enregistrement et comportant des instructions pour retrouver, lorsqu'elles sont exécuté par un ordinateur, la clé d'embrouillage transformée à l'émission par ladite fonction F selon la revendication 14.

## Patentansprüche

1. Verfahren zum Schutze eines an einen Bestand von Empfangsterminals (4, 8, 70) zu verteilenden Inhalts, die angeschlossen sind an ein Inhaltsverteilernetz und von denen jedes ein spezifisches, von den verwendeten technischen Sicherungsmitteln abhängiges Sicherheitsniveau hat, wobei dieses Verfahren die folgenden Schritte umfasst-beim Senden :
- Erzeugen eines Verschlüsselungsschlüssels K des genannten Inhalts,
- Transformieren des genannten Verschlüsselungsschlüssels K durch ein erstes Rechenmodul (26), angeordnet am Kopf des genannten Inhaltsverteilernetzes,
- Verschlüsseln des Inhalts durch den transformierten Schlüssel,
- Übertragen des verschlüsselten Inhalts und des Verschlüsselungsschlüssels zu den Terminals (4, 8, 70), und,
- beim Empfang des genannten Inhalts und des Verschlüsselungsschlüssels durch ein Terminal (4, 8, 70),
- Transformieren des Verschlüsselungsschlüssels K durch ein zweites Rechenmodul (40), eingerichtet in dem genannten Terminal (4, 8, 70),
- Entschlüsseln des Inhalts mit dem transformierten Verschlüsselungsschlüssel, wobei das Verfahren
außerdem **gekennzeichnet ist durch** Schritte, darin bestehend-beim Senden :
- Anwendung, mit Hilfe des genannten ersten Rechenmoduls (26), einer in Abhängigkeit von dem genannten spezifischen Sicherheitsniveau definierten Funktion F auf den genannten Verschlüsselungsschlüssel K,
und beim Empfangen :
- Anwendung, mit Hilfe des genannten zweiten Rechenmoduls (40), einer in Abhängigkeit von dem genannten spezifischen Sicherheitsniveau definierten Funktion F auf den genannten Verschlüsselungsschlüssel,

2. Verfahren nach Anspruch 1, bei dem sowohl das genannte erste Rechenmodul (26) als auch das genannte zweite Rechenmodul (40) mehrere Transformationsfunktionen Fi des genannten Verschlüsselungsschlüssels K umfasst, wobei jede Funktion Fi einem gegebenen Sicherheitsniveau Ni entspricht.

3. Verfahren nach Anspruch 1, bei dem die genannten technischen Sicherungsmittel entweder vom Typ Software oder vom Typ Hardware sind.

4. Verfahren nach Anspruch 3, bei dem die genannten Sicherungsmittel wenigstens eines der folgenden Merkmale umfassen :
- Speicherung des Entschlüsselungsschlüssels in verschlüsselter Form in einem nichtflüchtigen Speicher des Terminals,
- Speicherung des Applikationscodes des Terminals in verschlüsselter Form in einem nichtflüchtigen Speicher des Terminals,
- Laden des Applikationscodes während seiner Ausführung in einen nichtflüchtigen Speicher des genannten Terminals,
- Unverständlichkeitsmachung des genannten Codes.

5. Verfahren nach Anspruch 1, bei dem der Verschlüsselungsschlüssei K in verschlüsselter Form via ECM bzw. ECC (Elliptische-Kurven-Kryptographie) oder einer Lizenz des Typs DRM (Digital Right Management) an die Terminals (4, 8, 70) übertragen wird.

6. Verfahren nach Anspruch 1, bei dem die Anwendung der Funktian F auf den Verschlüsselungsschlüssel K durch den Operator via einer Signalisierung des Typs PMT (Program Mapping Table) gesteuert wird.

7. Verfahren nach Anspruch 2, bei dem jede Funktion Fi einem gegebenen Sicherheitsniveau Ni entspricht, das variiert zwischen einem minimalen Sicherheitsniveau und einem dem spezifischen Sicherheitsniveau des Terminals entsprechenden maximalen Sicherheitsniveau, wobei das genannte zweite Rechenmodul mehrere Transformationsfunktionen Fi des genannten Verschlüsselungsschlüssels umfasst.

8. Verfahren nach Anspruch 7, bei dem die genannte Funktion F eine Einwegfunktion ist.

9. Verfahren nach einem der vorhergehenden Ansprüche, bei dem der zu verteilende Inhalt ein digitaler Stream bzw. Datenstrom mit einer Basiskomponente mit dem minimalen Sicherheitsniveau und wenigstens eine zusätzliche Komponente mit einem höheren Sicherheitsniveau ist.

10. Verfahren nach Anspruch 9, bei dem die Verschlüsselung des Inhalts durch den transformierten Verschlüsselungsschlüssel entweder global auf alle Komponenten des Streams bzw. Datenstroms oder selektiv auf jede Komponente des Datenstroms angewendet wird.

11. Anwendung des Verfahrens nach Anspruch 10 auf einen Datenstrom in einem Kontext eines adaptiven Streamings, bei dem die Funktion F auf die Komponenten des Datenstroms mit den besten Qualitäten angewendet wird.

12. Sendevorrichtung eines an einen Bestand von Empfangsterminals (4, 8, 70) zu verteilenden Inhalts, die angeschlossen sind an ein Inhaltsverteilernetz und von denen jedes ein spezifisches, von den verwendeten technischen Sicherungsmitteln abhängiges Sicherheitsniveau hat, wobei diese Vorrichtung einen Generator (16) des Schlüssels zur Verschlüsselung des genannten Inhalts, einen Scrambler bzw. Verwürfler des Inhalts durch den transformierten Schlüssel und Finrichtungen zur Übertragung des verschlüsselten Inhalts und des Verschlüsselungsschlüssels zu den Terminals umfasst, und diese Vorrichtung
**dadurch gekennzeichnet ist, dass** sie außerdem eine oder mehrere Transmissionsfunktionen Fi des genannten Verschlüsselungsschlüssels K umfasst, wobei jede Funktion Fi einem bestimmten Sicherheitsniveau Ni entspricht.

13. Empfangsterminal eines Inhalts, das zu einem Bestand von Empfangsterminals gehört, die angeschlossen sind an ein Inhaltsverteilernetz und von denen jedes ein spezifisches, von den verwendeten technischen Sicherungsmitteln abhängiges Sicherheitsniveau hat, wobei der genannte Inhalt in einer durch einen Verschlüsselungsschlüssel verschlüsselten Form verteilt wird, der vorher durch ein erstes Rechenmodul (26) transformiert worden ist, angeordnet am Kopf des Netzes, und der genannte Schlüssel zu dem genannten Terminal übertragen wird, **dadurch gekennzeichnet, dass** es ein zweites Rechenmodul umfasst, dazu bestimmt, auf den genannten Verschlüsselungsschlüssel eine Transformation anzuwenden, die bzw. was ermöglicht, den beim Senden zur Verschlüsselung des übertragenen Inhalts benutzten transformierten Schlüssel wieder zu finden.

14. Computerprogramm, abgespeichert auf einem Aufzeichnungsmedium, mit Instruktionen, die, wenn ausgeführt durch einen Computer, dazu dienen, einen beim Senden durch eine Funktion F des Verfahrens des Anspruchs 1 transformierten Verschlüsselungsschlüssel zu berechnen.

15. Computerprogramm, abgespeichert auf einem Aufzeichnungsmedium, mit Instruktionen, die - wenn ausgeführt durch einen Computer - dazu dienen, den beim Senden durch die genannte Funktion F gemäß Anspruch 14 transformierten Verschlüsselungsschlüssel wieder zu finden.

## Claims

1. A method for protecting content to be distributed to a pool of receiving terminals (4, 8, 70) connected to a content distribution network and each having a specific security level depending on the technical securing means used, the method comprising the following steps :
at transminssion,
- generating an scrambling key K for said content,
- transforming said scrambling key K using a first calculation module (26) arranged in the headend of the content distribution network,
- scrambling the content using the transformed key,
- transmitting the scrambled content and the scrambling key to the terminals (4, 8, 70), and,
- upon reception of said content and of the scrambling key by a terminal (4, 8, 70),
- transforming said scrambling key using a second calculation module (40) arranged in said terminal (4, 8, 70),
- descrambling the content using the transformed scrambling key,
the method also being **characterized by** the steps consisting of,
when transmitting,
- applying to said scrambling key K, by means of said first calculation module (26), a function F defined according to said specific security level,
and at reception,
- applying to said scrambling key, by means of said second calculation module (40), a function F defined according to said specific security level.

2. A method according to Claim 1 in which said first calculation module (26) and said second calculation module (40) each include several functions Fi for transforming said scrambling key K, each function Fi corresponding to a given security level Ni.

3. A method according to Claim 1 wherein said technical securing means are either software or hardware.

4. A method according to Claim 3 in which said securing means comprise at least one of the following features:
- storage of the scrambling key in encrypted form in a non-volatile memory of the terminal,
- storage of the application code of the terminal in encrypted form in a non-volatile memory of the terminal,
- loading into a volatile memory of said terminal of the encrypted application code when it is executed,
- obfuscation of said code.

5. A method according to Claim 1 wherein the scrambling key K is trartsmitted, in encrypted form, to the terminals (4, 8, 70) via an ECM or a DRM (Digital Rights Management) license.

6. A method according to Claim 1 wherein the application of the function F to the scrambling key K is controlled by the operator via PMT (Program Mapping Table) signaling.

7. A method according to Claim 2 wherein said second calculation module includes several functions Fi for transforming said scrambling key, each function Fi corresponding to a given security level Ni varying between a minimum security level and a maximum security level corresponding to the specific security level of the terminal.

8. A method according to Claim 7 wherein said function F is a one-way function.

9. A method according to any ane of the foregoing claims wherein the content to be distributed is a digital stream comprising a base component having the minimum security level and at least one additional component having a higher security level.

10. A method according to Claim 9 wherein the scrambling of the content by the transformed scrambling key is applied either globally to all components of the stream or selectively to each component of the stream.

11. Application of the method according to Claim 10 to a stream in an adaptive streaming context wherein the function F is applied to the higher-quality components of the stream.

12. A device for sending content to be distributed to a pool of receiving terminals (4, 8, 70), connected to a content distribution network and each having a specific level of security depending an the technical securing means used, the device comprising a generator (16) of keys for scrambling said content, a content scrambler using the transformed key, means for transmitting the content and the scrambling key to the terminals, the device **characterized in that** it also includes one or more functions Fi for transforming said scrambling key K, each function Fi corresponding to a given security level Ni.

13. A content receiving terminal belonging to a pool of receiving terminals connected to a content distribution network and each having a specific security level depending on the technical means of securing used, said content being distributed in scrambled form by means of a scrambling key previously transformed by a first calculation module (26) arranged at the network headend, said key being transmitted to said terminal, **characterized in that** it comprises a second calculation module designed to apply to said scrambling key a transformation allowing recovery of the transformed key used in sending to scramble the transmitted content.

14. A computer program stored on a recording medium and comprising instructions for calculating, when they are executed by a computer, a scrambling key transformed on sending by a function F of the method of Claim 1.

15. A computer program stored on a recording medium and comprising instructions for recovering, when they are executed by a computer, the scrambling key transformed on sending by said function F according to Claim 14.
